# EUROPÄISCHE PATENTSCHRIFT

(11) **EP 0 470 043 B1**
(45) Veröffentlichungstag und Bekanntmachung des Hinweises auf die Patenterteilung: **06.12.1995**
(21) Anmeldenummer: 91710025.7
(22) Anmeldetag: 30.07.1991
(51) Int. Cl.: H02H 7/20, H02H 3/04

(54) **Elektrische Schaltungsanordnung**
Electrical circuit arrangement
Dispositif circuit électrique

(30) Priorität: 31.07.1990 AT 1604/90; 19.07.1991 AT 1454/91
(43) Veröffentlichungstag der Anmeldung: 05.02.1992
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: Dorra, Michael, W-5630 Remscheid 11 (DE); Hangauer, Wilfried, Dr., W-5609 Hückeswagen (DE); Karthaus, Friedrich, W-5630 Remscheid 11 (DE)
(74) Vertreter: Heim, Johann-Ludwig, Dipl.-Ing.

(56) Entgegenhaltungen:
- EP-A- 0 254 992
- EP-A- 0 283 895
- DE-A- 3 841 084
- US-A- 4 096 560
- US-A- 4 381 457
- US-A- 4 473 759
- US-A- 4 631 624

## Beschreibung

Die Erfindung bezieht sich auf eine elektrische Schaltungsanordnung zum Überwachen einer Versorgungsspannung für einen intermittierend über ein Stellglied betriebenen Verbraucher gemäß dem Oberbegriff des unabhängigen Patentanspruchs.

Solche elektrische Schaltungsanordnungen finden insbesondere Verwendung bei der Überwachung der Spannungsversorgung von elektronischen Datenverarbeitungsanlagen. Sie können aber auch - wie in der DE-OS 38 41 084 beschrieben - bei der Spannungsversorgung von Feuerungsautomaten für Heizungsanlagen Anwendung finden. Beim Auftreten einer Unterspannung steuert eine Überwachungsschaltung den Feuerungsautomaten derart an, daß ein Abschalten des Brenners bewirkt wird. Geht der Spannungspegel der Versorgungsspannung über ein vorgegebenes Toleranzband hinaus, das heißt, bei Überspannung kann es jedoch zu einer Fehlfunktion der Flammenüberwachung kommen.

Der vorliegenden Erfindung liegt die Aufgabe zugrunde, eine Schaltungsanordnung zum Überwachen einer Versorgungsspannung der eingangs näher bezeichneten Art zu schaffen, bei der die Versorgungsspannung auf das Einhalten einer bestimmten Toleranzbreite im Überspannungs- und Unterspannungsbereich geprüft wird und bei Überschreiten jeweils einer der Grenzen der angeschlossene Verbraucher in einen jegliche Gefährdung oder falsche Ergebnisse ausschließenden Zustand überführt wird.

Diese Aufgabe wird erfindungsgemäß durch die Merkmale des kennzeichnenden Teiles des unabhängigen Patentanspruches gelöst.

Weitere Ausgestaltungen und besonders vorteilhafte Weiterbildungen der Erfindung ergeben sich aus den abhängigen Patentansprüchen beziehungsweise aus den Ausführungsbeispielen der Zeichnung.

Es zeigen:
Figur 1 eine erste Schaltungsanordnung, die speziell für einen Feuerungsautomaten gedacht ist,
Figur 2 eine zweite Schaltungsanordnung, die für einen Mikroprozessor gedacht ist,
Figur 3 eine dritte Schaltungsanordnung, die zur Überwachung eines medizinischen Gerätes vorgesehen ist,
die Figuren 4 und 5 spezielle Spannungsteilerschaltungen und
die Figuren 6 bis 9 spezielle Ausgestaltungen der Unterspannungssimulationsstufe.

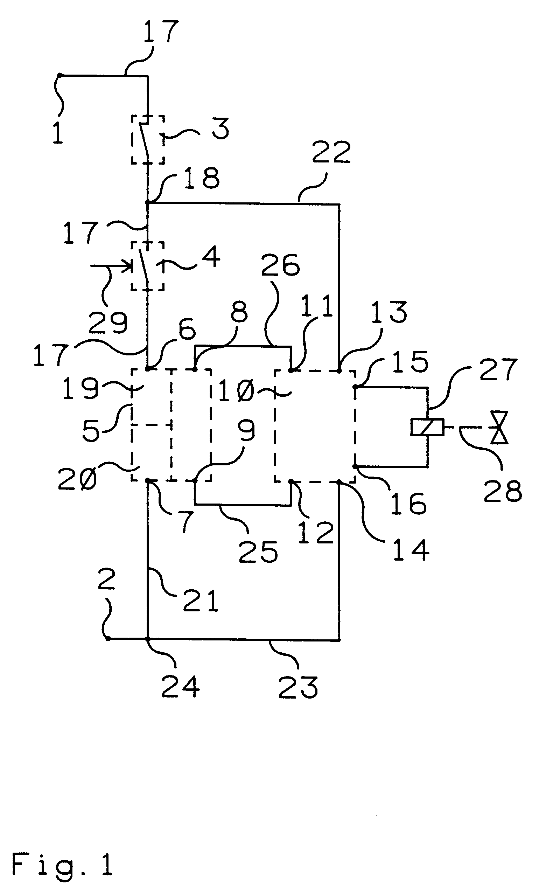

In allen neun Figuren bedeuten gleiche Bezugszeichen jeweils die gleichen Einzelheiten, und der Verwendungszweck der Schaltungen gemäß den Figuren 1 bis 3 ist austauschbar.

Die Schaltungsanordnung gemäß Figur 1 weist zwei Anschlüsse 1 und 2 auf, an denen die zu überwachende Versorgungsspannung anliegt. Hierbei handelt es sich um eine Wechselspannung von mindestens 220 V oder bei Export in andere Staaten um die ortsübliche Netzwechselspannung. Vom Anschluß 1 führt eine Leitung 17 zu einem Überhitzungsschutzkontakt 3 und von dort zu einem ersten Verzweigungspunkt 18. Von diesem setzt sich die Leitung 17 über eine Unterspannungssimulationsstufe 4 fort, die als ein von einem Wärmebedarf gesteuerter Schalter ausgebildet ist. Auf der dem Verbindungspunkt 18 abgewandten Seite ist die Leitung 17 mit einer Eingangsklemme 6 einer Schaltstufe 5 verbunden, die eine Unterspannungsschaltstufe 19 und eine Überspannungsschaltstufe 20 aufweist, die beide mit der Leitung 17 verbunden sind. Beide Schaltstufen sind mit der weiteren Eingangsklemme 7 verbunden, die über eine Leitung 21 mit dem Anschluß 2 verbunden ist.

Vom Verzweigungspunkt 18 zweigt eine Leitung 22 ab, die zu einem Versorgungsanschluß 13 eines Verbrauchers 10, vorzugsweise eines Feuerungsautomaten, führt. Der Anschluß 2 ist über eine Leitung 23, die an einem Verzweigungsanschluß 24 von der Leitung 21 abzweigt, mit dem zweiten Versorgungsanschluß 14 verbunden.

Ausgangsklemmen 8 und 9 der Schaltstufe 5 sind über Leitungen 26 und 25 mit Steuereingängen 11 und 12 des Verbrauchers 10 verbunden.

Der Verbraucher 10 steuert über seine Ausgangsanschlüsse 15 und 16, an die eine Leitung 27 angeschlossen ist, ein mit seiner Spule in die Leitung 27 eingeschleiftes Magnetventil 28 an.

Auf die Unterspannungssimulationsstufe 4 ist ein Signaleingang 29 geschaltet.

Die in der Figur 1 abgebildete Schaltung ist im Ruhezustand dargestellt, das heißt, der Kontakt des Überhitzungsschalters 3 ist geschlossen, und der Kontakt der Unterspannungssimulationsstufe ist infolge eines fehlenden Einschaltbefehls am Signaleingang 29 geöffnet. Da damit keine Spannung weitergeschaltet wird, wird eine Unterspannung simuliert, und zwar in der Höhe null Volt. Wie im Falle einer bei vorliegendem Einschaltbefehl anwesenden Unterspannung wird dadurch der Verbraucher 10 in der weiter unten beschriebenen Weise deaktiviert. Liegt ein Einschaltbefehl vor, so wird die Netzspannung durch die Unterspannungssimulationsstufe 4 an den Eingang 6 der Schaltstufe 5 weitergegeben. Bei anderem Aufbau der Unterspannungssimulationsstufe wäre es auch möglich, eine von der Netzspannung abgeleitete niedrigere Spannung auf die Schaltstufe 5 zu legen.

Allgemein formuliert gilt für die Ausführungsbeispiele nach den Figuren 1 bis 3, daß am Ausgang der Unterspannungssimulationsstufe 4, also auf der Leitung 17, im Falle eines vorliegenden Einschaltbefehls eine Spannung ansteht, die entweder die zu überwachende Spannung, also die Versorgungsspannung selbst, ist oder eine von ihr abgeleitete, monoton von der Versorgungsspannung abhängige Spannung. Unter monoton soll in diesem Zusammenhang verstanden werden, daß eine linderung der zu überwachenden Versorgungsspannung des Verbrauchers 10 stets eine gleichsinnige Änderung der von der Versorgungsspannung abgeleiteten Spannung zur Folge hat.

Die von der Unterspannungssimulationsstufe 4 auf die Eingangsklemme 6 weitergegebene Spannung wird innerhalb der Schaltstufe 5 sowohl in der Überspannungsschaltstufe 20 wie auch in der Unterspannungsschaltstufe 19 auf Einhalten eines Toleranzbandes überprüft. Wenn die Spannung innerhalb des Toleranzbandes ist, steht ein entsprechendes Signal über die Leitungen 26 und 25 an Steuereingängen 11 und 12 des Verbrauchers 10 an. Damit ist dieser Verbraucher positiv aktiviert, das heißt, die über die Leitungen 22 und 23 an den Versorgungsspannungsanschlüssen 13 und 14 anliegende Versorgungsspannung kann im Inneren des Verbrauchers 10 bestimmungsgemäß verarbeitet werden. Überschreitet die Versorgungsspannung hingegen das Toleranzband, ist also eine Unterspannung oder eine Überspannung außerhalb festgelegter Toleranzgrenzen vorhanden, so wird der Verbraucher 10 über die Leitungen 25 und 26 gesperrt, das heißt, er kann die anliegende Versorgungsspannung nicht verarbeiten, beziehungsweise er wird veranlaßt, diese Spannung dahin gehend zu verarbeiten, daß er in einen für den Benutzer der Einrichtung sicheren Zustand überfürt wird. Im Falle des Feuerungsautomaten bedeutet dies, daß das Magnetventil 28 beispielsweise gesperrt wird oder daß der zugehörige Brenner nur mit einem minimalen Gasdurchsatz arbeitet, der zum Beispiel einen Frostschutz der Heizungsanlage bewirkt, oder daß wichtige Datenverarbeitungsprozesse nicht weitergeführt werden, weil die Gefahr falscher Rechenergebnisse zu groß wird.

Wird die Überschreitung des Toleranzbandes aufgrund einer Variation der Höhe der Versorgungsspannung beendet, so daß letztere wieder innerhalb des Toleranzfeldes liegt, so wird der Verbraucher 10 wieder freigegeben.

Ist die Unterspannungs-Simulationseinrichtung beispielsweise als Schaltthermostat ausgebildet, so ist der Signaleingang 29 zum Beispiel durch einen Kapillarrohrfühler dargestellt. Entspricht die erreichte Temperatur der Soll-Temperatur, so verschwindet das Eingangssignal auf dem Anschluß 29 und die Unterspannungs-Simulationsstufe 4 simuliert Unterspannung, so daß es auf diesem Wege wieder zu einem Stillsetzen des Verbrauchers 10 kommt.

Der Vorteil der Erfindung liegt darin, daß für die Regelabschaltung, wie eben beschrieben, die gleiche Vorrichtung ausgenutzt wird, wie für die Überwachung der Versorgungsspannung auf Unterspannung.

Wesentlich ist, daß die beiden Schaltstufen 19 und 20 in Figur 1 einzeln Schmitt-Trigger-Verhalten aufweisen.

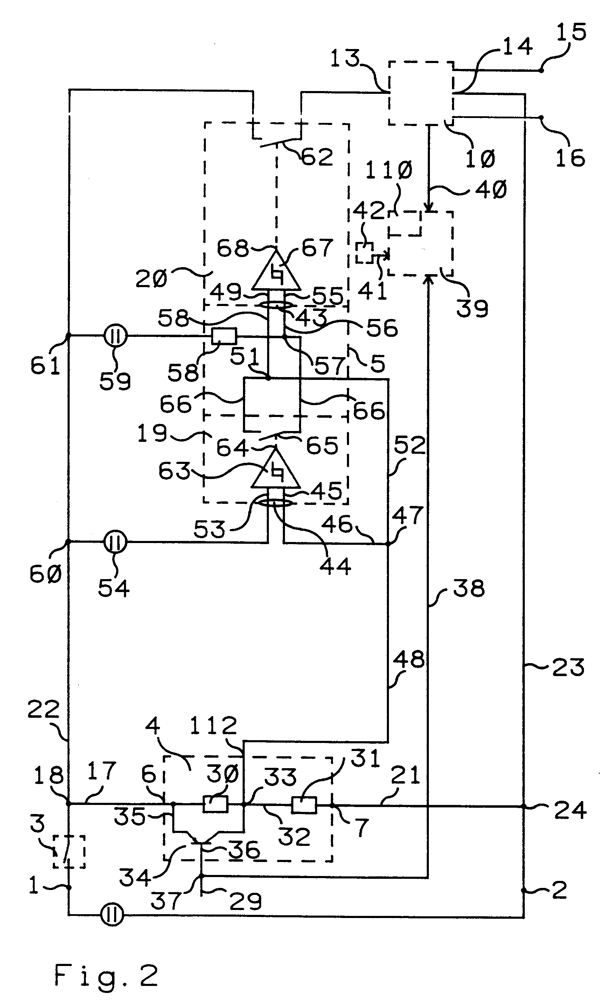

Beim Ausführungsbeispiel gemäß Figur 2 liegt die in ihrer Höhe zu überwachende Versorgungsspannung wieder an den Klemmen 1 und 2 an, bei der Versorgungsspannung handelt es sich diesmal um eine Gleichspannung von etwa 24 Volt. Die Überwachung einer Netzspannung wäre sinngemäß möglich.

An den Verzweigungspunkt 18 ist die Unterspannungs-Simulationsstufe 4 wiederum angeschlossen, die im wesentlichen aus der Serienschaltung zweier Widerstände 30 und 31 besteht, wobei die äußeren Enden der Widerstände mit den Klemmen 6 und 7 verbunden sind und die beiden Widerstände selbst über eine Leitung 32 verbunden sind, in der ein Verzweigungspunkt 33 vorgesehen ist. Der Verzweigungspunkt 33 ist mit dem Kollektoranschluß eines Transistors 34 verbunden, dessen Emitter über eine Leitung 35 mit der Klemme 6 verbunden ist. Die Basis 36 des Transistors ist über einen Verzweigungspunkt 37 mit dem Signalanschluß 29 verbunden. Von dem Verzweigungspunkt 37 führt eine Leitung 38 zu einer Alarmstufe 39, die über eine Signalleitung 40 mit dem Verbraucher 10 und über eine weitere Leitung 41 mit einer Erkennungsstufe 42 verbunden ist.

Die Schaltstufe 5 besteht wiederum aus der Unterspannungsschaltstufe 19 und der Überspannungsschaltstufe 20. Beide weisen je einen Eingang 43 und 44 auf, der aus einem oder mehreren Leitungsanschlüssen bestehen kann. Dargestellt in der Zeichnung sind zwei Leitungsanschlüsse pro Eingang, wobei der eine Leitungsanschluß 45 der Unterspannungs-Simulationsstufe über eine Leitung 46 mit einem Verzweigungspunkt 47 verbunden ist, der über eine weitere Leitung 48 mit dem Verzweigungspunkt 33 verbunden ist. Der Leitungsanschluß 49 des Eingangs 43 der Überspannungsschaltstufe 20 ist über eine Leitung 50 mit einem Verzweigungspunkt 51 verbunden, der über eine Leitung 52 mit dem Verzweigungspunkt 47 verbunden ist. Der zweite Leitungsanschluß 53 des Eingangs 44 der Unterspannungsschaltstufe 19 ist an eine Referenzspannungsquelle 54 angeschlossen, die die Grenze vorgibt, unterhalb derer eine Unterspannung vorliegt. Da über die Widerstände 30 und 31 die in ihrer Höhe zu überwachende Versorgungsspannung heruntergeteilt wird, wird die Höhe der Referenzspannung der Referenzspannungsquelle 54 entsprechend zu bemessen sein.

Der zweite Leitungsanschluß 55 des Eingangs 43 der Überspannungsschaltstufe 20 ist über eine Leitung 56 mit einem Verzweigungspunkt 57 verbunden, der über einen Widerstand 58 mit einer zweiten Referenzspannungsquelle 59 verbunden ist, die die Grenzschwelle für das Vorhandensein einer Überspannung vorgibt. Bei der Bemessung dieser Referenzspannung ist ebenfalls das Teilungsverhältnis des aus den Widerständen 30 und 31 bestehenden Spannungsteilers zu berücksichtigen. Beide Referenzspannungsquellen 54 und 59 sind auf der den Eingängen der Schaltstufen abgewandten Seite mit der Leitung 22 verbunden, und zwar über Verzweigungspunkte 60 und 61. Die Leitung 22 setzt sich hinter den Verzweigungspunkt 61 fort und führt zu einem Schalter 62, hinter dem sie auf den Versorgungsspannungsanschluß 13 des Verbrauchers 10 geführt ist. Vom Versorgungsspannungsanschluß 14 führt die Leitung 23 zum Verzweigungspunkt 24. Die Leitungsanschlüsse 45 und 53 führen zu einem Verstärker 63, dessen Ausgang 64 einen Schalter 65 betätigt, der im Zuge einer Leitung 66 liegt, die an die Verzweigungspunkte 51 und 57 angeschlossen ist. Das heißt, der Schalter 65, der als Halbleiterschalter ausgebildet ist, kann den Eingang 43 der Überspannungsschaltstufe 20 kurzschließen.

Auch in der Überspannungsschaltstufe 20 sind die Leitungsanschlüsse 49 und 55 auf einen Verstärker 67 geschaltet, wobei ein Ausgang 68 dieses Verstärkers den Schalter 62 beherrscht.

Analog zu der Darstellung gemäß Figur 1 weist der Verbraucher 10 Ausgangsanschlüsse 15, 16 auf, von denen weitere mit Spannung zu versorgende Elemente abgehen. Ebenfalls wie in Figur 1 weisen beide Schaltstufen 19 und 20 einzeln Schmitt-Trigger-Verhalten auf.

Die Funktion der Schaltung gemäß Figur 2 ist folgende: Von der über die Anschlüsse 1 und 2 anliegenden Versorgungsspannung wird in der Unterspannungs-Simulationsstufe 4 eine Spannung abgeleitet, vorzugsweise eine gegenüber der Versorgungsspannung niedrigere Spannung über den Spannungsteiler 30/31. Diese Spannung liegt über die Leitung 48 und die Leitungen 46, 52 und 50 sowohl an dem Eingang der Unterspannungsschaltstufe wie an dem Eingang der Überspannungsschaltstufe. An den Eingängen liegen auch die Referenzspannungen an, so daß innerhalb der Schaltstufen erkennbar ist, ob die Versorgungsspannung im Bereich des Toleranzfeldes liegt, das Toleranzfeld unterschreitet oder überschreitet. Dies gilt, so lange am Signalanschluß 29 ein Einschaltbefehl vorhanden ist.

Liegt die Versorgungsspannung in ihrer zu überprüfenden Höhe innerhalb des Toleranzfeldes, das heißt, ist weder eine Überspannung über eine zulässige Größe noch eine Unterspannung unterhalb einer zulässigen Größe vorgegeben durch die Referenzspannungen anwesend, so wird der Schalter 65 geöffnet oder er bleibt geöffnet und der Ausgang 68 der Überspannungsschaltstufe, die somit von der Unterspannungsschaltstufe nicht beeinflußt ist, schließt den Schalter 62. Damit ist der Verbraucher 10 mit den klemmen 1 und 2 der Versorgungsspannung verbunden und kann ordnungsgemäß arbeiten.

Wenn bei weiterhin vorhandenem Einschaltbefehl auf der Leitung 29 die Versorgungsspannung in ihrer Höhe anwächst und zu einer Überspannung führt, so bringt der Vergleich dieser Spannung mit der Referenzspannung 59 die Überspannungsschaltstufe 20 zum Ansprechen. Über deren Ausgang 68 wird der Schalter 62 geöffnet, das heißt, der Verbraucher 10 wird von der Versorgungsspannung getrennt.

Bewegt sich die Höhe des Spannungspegels der Versorgungsspannung in Richtung Unterspannung und unterschreitet die Unterspannung die durch die Referenzspannungsquelle 54 vorgegebene Spannung, so schaltet die Unterspannungsschaltstufe 19 den Schalter 65, das heißt, der Eingang der Überspannungsschaltstufe 20 wird kurzgeschlossen. Damit geschieht das gleiche wie beim Ansprechen der Überspannungsschaltstufe, nämlich der Schalter 62 wird geöffnet.

Für den Fall, daß auf dem Signalspannungsanschluß 29 kein Signal ansteht oder dieses Signal verschwindet, weil der Verbraucher 10 aus irgendwelchen Gründen außer Betrieb gesetzt werden soll, wird der Transistor 34 leitend geschaltet, so daß der Widerstand kurzgeschlossen wird. Damit nimmt das Potential des Punktes 33 das Potential des Punktes 18 an, das heißt, es wird Unterspannung in der Höhe null simuliert. Die Unterspannungsschaltstufe 19 spricht an und schließt den Schalter 65, wodurch letztlich der Verbraucher 10 abgeschaltet wird.

Es wird darauf hingewiesen, daß der Verbraucher 10 nicht unbedingt über einen mit ihm in Serie liegenden Schalter 62 von der Versorgungsspannung, anliegend an den Punkten 1 und 2, abgeschaltet werden muß. Es wäre auch möglich, den Verbraucher 10 permanent an der Versorgungsspannung angeschlossen zu lassen, aber innerhalb des Verbrauchers über den Schalter 62 dafür zu sorgen, daß der Verbraucher 10 einen bestimmten Zustand einnimmt. Dieser Zustand muß erstens für den Benutzer der Anlage sicher sein und zweitens einen Ausschaltbefehl zum Inhalt haben. Dieser Zustand muß dem inaktiven Zustand des Verbrauchers entsprechen im Gegensatz zum aktiven Zustand, bei dem an den Anschlüssen 15 und 16 eine Ausgangsspannung anliegt.

Der Zustand des Aktivseins oder Nichtaktivseins des Verbrauchers 10 wird über die Leitung 40 der Alarmstufe 39 mitgeteilt. Über die Erkennungsstufe 42 kann die Alarmstufe 39 entscheiden, ob der jeweilige Zustand des Verbrauchers 10, also aktiv sein oder inaktiv sein, dem Zustand des Signals am Anschluß 29 entspricht. Ist ein Einschaltsignal am Anschluß 29 vorhanden, muß der Verbraucher 10 aktiv werden und umgekehrt. Stimmen diese Zustände nicht überein, wird über die Alarmstufe 39 Alarm gegeben.

Die in der Figur 2 dargestellte Schaltung kann sich auch noch selbst überwachen:

Ist die Unterspannungs-Simulationsstufe 4 gestört, so können folgende Zustände auftreten:
1. Wird dauernd Unterspannung simuliert, so kann keine Einschaltung des Verbrauchers erfolgen. Die Alarmstufe 39 signalisiert das und fordert gegebenenfalls den Benutzer des zugehörigen Gerätes auf, sich um die Störung zu kümmern. Ansonsten ist der Zustand sicher für den Benutzer der Anlage, allerdings möglicherweise mit Unbequemlichkeiten verbunden.
2. Die zweite Möglichkeit der Störung der Unterspannungs-Simulationsstufe kann darin bestehen, daß die an dem Punkt 33 anstehende von der Versorgungsspannung abgeleitete Spannung permanent an beiden Eingingen 43 und 44 liegt. Liegt diese abgeleitete Spannung im Toleranzfeld, bleibt der Verbraucher 10 dauernd eingeschaltet, gleichgültig ob ein Einschaltbefehl auf dem Leitungsanschluß 29 vorhanden ist. Damit registriert die Alarmstufe 39, daß beide Zustände, nämlich Signal auf dem Anschluß 29 und Verhalten des Verbrauchers nicht übereinstimmen. Es erfolgt eine Alarmmeldung, wenn das Einschaltsignal auf dem Anschluß 29 verschwindet.

Ist die Überspannungsschaltstufe 20 oder die Unterspannungsschaltstufe 19 gestört, so kann der Schalter 62 seinen Schaltzustand nicht wechseln. Damit stimmt entweder bei Vorliegen eines Einschaltsignals am Anschluß 29 oder bei dessen Fehlen der Zustand des Verbrauchers 10 nicht mit dem Signal am Anschluß 29 überein, so daß die Alarmstufe 39 Alarm gibt.

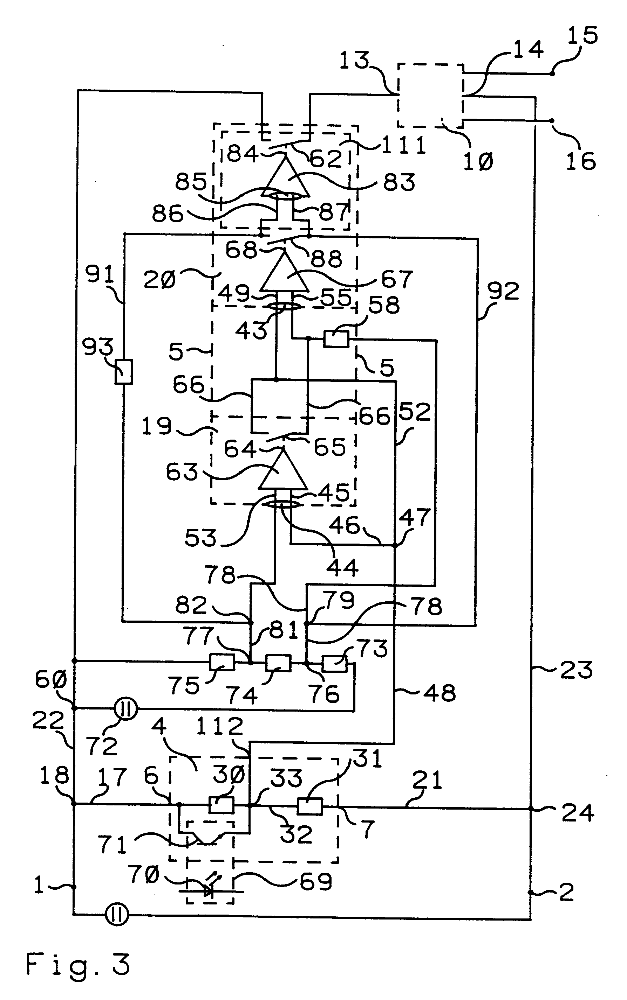

Die Figur 3 zeigt ein Ausführungsbeispiel der erfindungsgemäßen Schaltung, das eine Verfeinerung des in der Figur 2 Dargestellten zum Inhalt hat. Die folgende Beschreibung geht daher nur auf die Zusätzlichkeiten der Schaltung der Figur 3 ein. Die Elemente 3 sowie 38 bis 42 aus Figur 2 sind der Übersichtlichkeit halber nicht dargestellt, sind jedoch als in gleicher Weise wie dort eingebunden anzunehmen.

Die erste Abweichung findet sich im Aufbau der Unterspannungs-Simulationsstufe 4. Der Transistor 34 ist durch einen Optokoppler 69 ersetzt, der aus einer lichtemittierenden Diode 70 und einem lichtempfindlichen Transistor 71 besteht. Der Transistor ist mit seiner Kollektor-Emitter-Strecke parallel zum Widerstand 30 geschaltet, und die lichtemittierende Diode ist an eine Spannungsquelle angeschlossen. Hierbei gilt, daß die lichtemittierende Diode den Ausschaltbefehl für den Verbraucher 10 vorgibt. In der Leitung zur Spannungsversorgung der Diode liegt noch ein Schalter, um die Diode selbst zu steuern.

Die beiden Referenzspannungsquellen 54 und 59 sind durch eine einzige Referenzspannungsquelle 72 ersetzt. Der Referenzspannungsquelle 72 ist ein Spannungsteiler, bestehend aus drei in Serie geschalteten Widerständen 73, 74 und 75, parallel geschaltet, wobei zwischen jeweils zwei Widerständen zwei Verbindungspunkte 76 beziehungsweise 77 vorgesehen sind. Der Verbindungspunkt 76 ist mit einer Leitung 78 mit einem weiteren Verbindungspunkt 79 verbunden, wobei die Leitung 78 über einen Widerstand 58 mit dem Leitungsanschluß 55 verbunden ist. Vom Verzweigungspunkt 77 führt eine Leitung 81 zu einem weiteren Verbindungspunkt 82 und danach zum Leitungsanschluß 53. Die Überspannungsschaltstufe 20 weicht von Überspannungsschaltstufe der Figur 2 ab, weil ein weiterer Verstärker 83 vorgesehen ist, der aus einem Transistor oder einer Transistorstufe bestehen kann, der mit seinem Ausgang 84 den Schalter 62 beherrscht. Der Verstärker 83 weist einen Eingang 85 auf, an den zwei Leitungen 86 und 87 angeschlossen sind. Diese sind von einem Schalter 88 verbindbar, dessen Schaltzustand vom Ausgang 68 des Verstärkers 67 gesteuert ist. Der Schalter 88 kann ein Halbleiterschalter sein. Von den Anschlußpolen 89 und 90 des Schalters 88 zweigen zwei Leitungen 91 und 92 ab, die mit den Verbindungspunkten 82 und 79 verbunden sind, wobei in der Leitung 91 ein Widerstand 93 vorgesehen ist.

Über die Leitungen 91 und 92 wird der Schaltzustand des Schalters 88 auf den Eingang 44 der Unterspannungs-Simulationsstufe beziehungsweise auf die Anschlußleitung 55 des Eingangs der Überspannungsschaltstufe 20 mitkoppelnd zurückgeführt. Das bedeutet, daß die gesamte Schaltstufe 5 Schmitt-Trigger-Verhalten erhält, welches wirksam wird, wenn die Versorgungsspannung das durch die Referenzspannungsquelle und den angeschlossenen Spannungsteiler definierte Toleranzband verläßt oder in dieses zurückkehrt. Es ist hierbei in Erinnerung zu halten, daß die Referenzspannung in ihrer Höhe nicht unbedingt der Versorgungsspannung angepaßt sein muß, sondern einer hiervon abgeleiteten Spannung angepaßt sein kann.

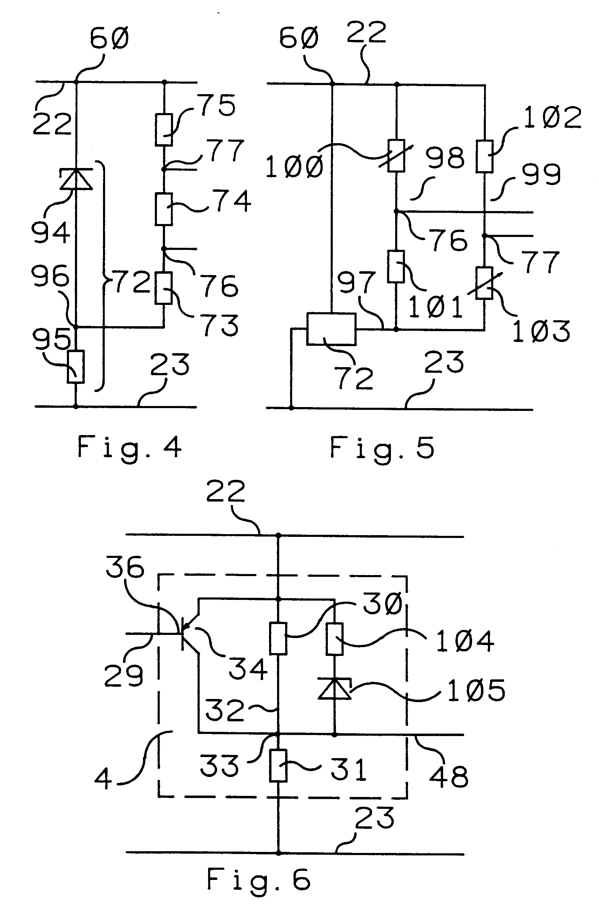

Die Figuren 4 und 5 zeigen besondere Ausbildungsformen der Referenzspannungsquelle 72 beziehungsweise des zugehörigen Spannungsteilers. In Figur 4 besteht die Referenzspannungsquelle 72 aus einer Z-Diode 94 und einem mit ihr in Serie geschalteten Widerstand 95, die beide zwischen die Leitungen 22 und 23 geschaltet sind. An den Verbindungspunkt 96 zwischen beiden ist der Spannungsteiler, bestehend aus der Serienschaltung der Widerstände 73 bis 75, angeschlossen.

Somit wird aus der Figur 4 ersichtlich, daß die Referenzspannung zwar von der Versorgungsspannung abgeleitet wird, mit ihr aber nicht identisch ist, genauso wie die in der Unterspannungs-Simulationsstufe 4 erzeugte Spannung von der Versorgungsspannung abgeleitet mit ihr aber auch nicht identisch ist, von ihr aber monoton abhängig ist.

Beim Ausführungsbeispiel gemäß Figur 5 ist zwischen die Leitungen 22 und 23 ein Spannungsregler 72 beliebigen Aufbaus geschaltet, an dessen Ausgang 97 zwei Spannungsteiler 98 und 99, bestehend jeweils aus der Serienschaltung der zwei Widerständen 100 und 101 beziehungsweise 102 und 103, geschaltet sind. An den Verbindungspunkten jeweils eines Paares der Widerstände ergeben sich die Verbindungspunkte 76 und 77. Führt man jeweils einen Widerstand einer Serienschaltung einstellbar aus, ist es möglich, die Höhe der Referenzspannungen unabhängig voneinander einstellbar zu gestalten. Beim Ausführungsbeispiel gemäß Figur 4 beeinflussen sich die beiden Referenzspannungen geringfügig.

Es versteht sich, daß der Aufbau der Referenzspannungsquellen gemäß Figuren 4 und 5 - unter Umständen nach zweckmäßiger Anpassung der exakten Schaltung - die Referenzspannungsquellen 54 und 59 der Schaltung gemäß Figur 2 beziehungsweise die Referenzspannungsquelle 72 gemäß Figur 3 ersetzen kann.

Es ist weiterhin möglich, den speziellen Spannungsteiler nach Figur 4 mit den Spannungsteilern nach Figur 5 auszutauschen.

Die Figuren 6 bis 9 zeigen spezielle Ausgestaltungsmöglichkeiten der Unterspannungs-Simulationsstufe 4 nach den Figuren 1 bis 3.

Beim Ausführungsbeispiel gemäß Figur 6 ist parallel zum Widerstand 30, der genauso wie bei den Ausführungsbeispielen gemäß Figuren 2 und 3 ersatzlos entfallen kann, eine Überbrückungsschaltung vorgesehen, die parallel zur Emitter-Kollektor-Strecke des Transistors 34 angeordnet ist und den Widerstand 30, wenn er denn vorhanden ist, überbrückt. Die Überbrückungsschaltung besteht aus der Serienschaltung eines Widerstandes 104 mit einer Z-Diode 105. Dieser Überbrückungsschaltung können weitere Überbrückungsschaltungen, wiederum bestehend aus einem Widerstand in Serie mit einer Z-Diode ihrerseits parallel geschaltet sein. Diese Schaltung bewirkt, daß das Spannungsteilerverhältnis oberhalb einer bestimmten Spannung verkleinert wird.

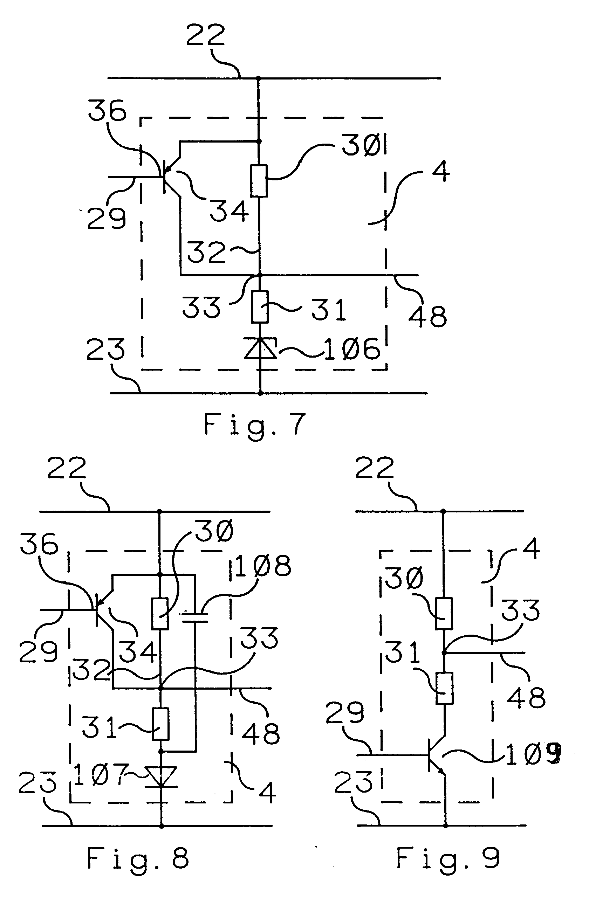

Die Figur 7 zeigt, daß der Widerstand 31 durch eine Z-Diode 106 ersetzt werden kann. In diesem Fall ist der Widerstand 30 vorhanden, und durch diese Schaltung wird erreicht, daß die Ausgangsspannung auf der Leitung 48 nicht multiplikativ über den Spannungsteiler herabgesetzt wird, sondern daß von ihr ein bestimmter Spannungsbetrag, abhängig von der Z-Spannung der Diode 106, abgezogen wird.

Beim Ausführungsbeispiel gemäß Figur 8 wird bevorzugt eine Wechselspannung überwacht. Diese Schaltung würde also insbesondere für das Ausführungsbeispiel nach Figur 1 eignen. Die Wechselspannung liegt an einer Serienschaltung der beiden Widerstände 30 und 31 sowie einer Diode 107 an, hierbei kann der Widerstand 30 entfallen. Die beiden Widerstände 30 und 31 oder die Serienschaltung des Transistors 34 mit seiner kollektor-Emitter-Strecke und des Widerstandes 31 ist durch einen kondensator 108 überbrückt. Obgleich von der Unterspannungs-Simulationsstufe 4 gemäß Figur 8 eine Wechselspannung verarbeitet wird, erscheint aufgrund der Gleichrichtungswirkung der Diode 107 und der Glättungswirkung des kondensators 108 auf der Leitung 48 eine Gleichspannung.

Beim Ausführungsbeispiel gemäß Figur 9 sind die beiden Widerstände 30 und 31, zwischen denen die Leitung 48 am Verbindungspunkt 33 abgeht, in Serie mit einer kollektor-Emitter-Strecke eines Transistors 109 geschaltet und liegen als Gesamtschaltung in Serie zwischen den Leitungen 22 und 23. Der Basisanschluß des Transistors führt auf den Anschluß 29, der Widerstand 31 kann durch eine Drahtbrücke ersetzt werden, der Widerstand 30 kann ersatzlos entfallen. Diese Schaltungsform stellt bei entsprechender Ausbildung der Widerstände die einfachstmögliche dar. Die Transistoren 34 und 109 können durch beliebige andere elektronisch oder mechanische Schalter ersetzt werden.

## Patentansprüche

1. Elektrische Schaltungsanordnung zum Überwachen einer Versorgungsspannung für einen intermittierend über ein Stellglied (62) betriebenen Verbraucher (10), wobei eine Unterspannungssimulationsstufe (4) und eine Unterspannungsschaltstufe (19) vorgesehen sind, dadurch gekennzeichnet, daß die Ausgangsspannung der Unterspannungssimulationsstufe (4) über eine Leitung (48) sowohl auf einen Eingang (44) der Unterspannungsschaltstufe (19) als auch auf einen Eingang (43) einer Überspannungsschaltstufe (20) geschaltet ist, in denen sie mit von Referenzspannungsquellen (54, 59) stammenden Referenzspannungen verglichen wird, und daß ein von der Unterspannungsschaltstufe (19) gesteuerter Schalter (65) den Eingang (43) der Überspannungsschaltstufe (20), die das Stellglied (62) für den Verbraucher (10) enthält, beim Auftreten einer Unterspannung kurzschließt.

2. Elektrische Schaltungsanordnung nach Anspruch 1, dadurch gekennzeichnet, daß für die Unterspannungsschaltstufe (19) und die Überspannungsschaltstufe (20) separate Referenzspannungsquellen (54, 59) vorgesehen sind.

3. Elektrische Schaltungsanordnung nach Anspruch 1, dadurch gekennzeichnet, daß die Ausgänge der Referenzspannungsquellen (54, 59) auf die Eingänge (44, 43) der Unterspannungsschaltstufe (19) und der Überspannungsschaltstufe (20) geschaltet sind.

4. Elektrische Schaltungsanordnung nach Anspruch 2, dadurch gekennzeichnet, daß die Referenzspannungsquelle (59) für die Überspannungsschaltstufe (20) über einen Widerstand (58) mit dem Eingang (43) der Überspannungsschaltstufe (20) verbunden ist.

5. Elektrische Schaltungsanordnung nach Anspruch 1, dadurch gekennzeichnet, daß nur eine Referenzspannungsquelle (72) vorhanden ist, die aus einer Serienschaltung einer Z-Diode (94) mit einem Widerstand (95) besteht und daß ein Spannungsteiler, bestehend aus wenigstens zwei Widerständen (73, 74, 75), parallel zur Z-Diode (94) geschaltet ist, wobei der Eingang der Unterspannungsschaltstufe (19) und der Eingang (43) der Überspannungsschaltstufe an den Spannungsteiler geführt sind.

6. Elektrische Schaltungsanordnung nach Anspruch 5, dadurch gekennzeichnet, daß der Spannungsteiler aus zwei separaten Spannungsteilern aufgebaut ist, die aus je zwei Widerständen (100, 101 und 102, 103) bestehen, wobei die Verbindungspunkte (76, 77) beider Widerstände jeweils mit den Eingängen (43, 44) der Unter- und Überspannungsschaltstufe (19, 20) verbunden sind.

7. Elektrische Schaltungsanordnung nach einem der vorangehenden Ansprüche, dadurch gekennzeichnet, daß die Unterspannungssimulationsstufe (4) aus einer Serienschaltung zweier Widerstände (30, 31) besteht, wobei einer (30) der Widerstände (30, 31) von einem Schalter (34) überbrückbar ist und wobei der Ausgang (112) der Unterspannungssimulationsstufe (4) von dem Verbindungspunkt (33) beider Widerstände (30, 31) gebildet ist.

8. Elektrische Schaltungsanordnung nach Anspruch 7, dadurch gekennzeichnet, daß eine Reihenschaltung aus einer Z-Diode (105) und einem Widerstand (104) parallel zum Schalter (34) geschaltet ist.

9. Elektrische Schaltungsanordnung nach einem der Ansprüche 1 bis 6, dadurch gekennzeichnet, daß die Unterspannungssimulationsstufe (4) aus einer Serienschaltung eines Widerstandes (30) mit einer Z-Diode (106) besteht, wobei der Widerstand (30) durch einen Schalter (34) überbrückbar ist und wobei der Ausgang (112) der Unterspannungssimulationsstufe (4) von dem Verbindungspunkt (33) des Widerstandes (30) mit der Z-Diode (106) gebildet ist.

10. Elektrische Schaltungsanordnung nach Anspruch 1 bis 6, dadurch gekennzeichnet, daß die Unterspannungssimulationsstufe (4) aus einer Serienschaltung zweier Widerstände (30, 31) mit einer Diode (107) besteht, wobei die Serienschaltung der Widerstände (30,31) von einem Kondensator (108) überbrückt ist und ein elektrischer Schalter (34) einen (30) der beiden Widerstände (30, 31) überbrücken kann und wobei der Ausgang (112) der Unterspannungssimulationsstufe (4) vom Verbindungspunkt (33) beider Widerstände (30, 31) gebildet ist.

11. Elektrische Schaltungsanordnung nach einem der Ansprüche 1 bis 6, dadurch gekennzeichnet, daß die Unterspannungssimulationsstufe (4) aus einer Serienschaltung zweier Widerstände (30, 31) mit einem elektrischen Schalter (109) besteht und wobei der Ausgang (112) der Unterspannungssimulationsstufe (4) vom Verbindungspunkt (33) beider Widerstände (30, 31) gebildet ist.

12. Elektrische Schaltungsanordnung nach einem der vorangehenden Ansprüche, dadurch gekennzeichnet, daß die Unterspannungsschaltstufe (19) mit einem Schalter (65) versehen ist, der die beiden Eingangsleitungen (49, 55) des Eingangs (43) der Überspannungsschaltstufe (20) verbinden kann.

13. Elektrische Schaltungsanordnung nach einem der vorangehenden Ansprüche, dadurch gekennzeichnet, daß das Stellglied (62) als elektrischer Schalter ausgebildet ist, der entweder die Versorgungsspannung vom Verbraucher (10) abschaltet oder einen Schaltvorgang im Verbraucher (10) auslöst, der den Verbraucher inaktiv schaltet.

14. Elektrische Schaltungsanordnung nach einem der vorangehenden Ansprüche, dadurch gekennzeichnet, daß eine Alarmstufe (39) vorgesehen ist, die über eine Leitung (40) vom Verbraucher (10) und über eine weitere Leitung (38) von einem Signalanschluß (29) beaufschlagt ist, wobei eine Signalanordnung vorgesehen ist, die dann ein Ausgangssignal abgibt, wenn der Schaltzustand (aktiv/inaktiv) des Verbrauchers (10) dem Eingangssignal am Signalanschluß (29) nicht entspricht.

15. Elektrische Schaltungsanordnung nach Anspruch 14, dadurch gekennzeichnet, daß die Alarmstufe (39) eine Verzögerungsschaltung (110) aufweist.

16. Elektrische Schaltungsanordnung nach einem der vorangehenden Ansprüche, dadurch gekennzeichnet, daß die Überspannungsschaltstufe (20) einen Differenzverstärker (111) enthält, der das Stellglied (62) des Verbrauchers (10) betätigt und dessen Eingang (87) von einem weiteren Schalter (88) überbrückbar ist, der vom Ausgang (68) eines Verstärkers (67) gesteuert ist, auf dessen Eingang die Leitungsanschlüsse (49 und 55) der Überspannungsschaltstufe (20) geführt sind.

17. Elektrische Schaltungsanordnung nach Anspruch 16, dadurch gekennzeichnet, daß der Schalter (88) der Überspannungsschaltstufe (20) über Verbindungsleitungen (91, 92) mit dem Spannungsteiler (73 bis 75 beziehungsweise 101 bis 103) und mit den Eingängen (43, 44) der Unterspannungsschaltstufe (19) und der Überspannungsschaltstufe (20) verbunden ist.

18. Elektrische Schaltungsanordnung nach Anspruch 17, dadurch gekennzeichnet, daß der Spannungsteiler als Serienschaltung dreier Widerstände (73 bis 75) ausgebildet ist und daß die beiden Verbindungsleitungen (92, 91) an die Verbindungspunkte (76, 77) jeweils zweier Widerstände (73/74 und 74/75) gelegen sind.

19. Schaltungsanordnung nach Anspruch 18, dadurch gekennzeichnet, daß in einer der Verbindungsleitungen (91, 92) ein Widerstand (93) vorgesehen ist.

## Claims

1. An electric circuit arrangement for monitoring a supply voltage to be applied to a load (10), which is intermittently operated under the control of a final control element (62), wherein an undervoltage-simulating stage (4) and an undervoltage detector stage (19) are provided, characterized in that the output voltage of the undervoltage-simulating stage (4) is applied via aline (48) to an input (44) of the undervoltage detector stage (19) and to an input (43) of an overvoltage detector stage (20) and in said detector stages is compared with reference voltages, which originate from reference voltage sources (54, 59), the overvoltage detector stage (20) comprises the final control element (62) for the load (10) and the input (43) of the overvoltage detector stage (20) is short-circuited in response to the occurrence of an undervoltage by a switch (65), which is controlled by the undervoltage detector stage (19).

2. An electric circuit arrangement according to claim 1, characterized in that separate reference voltage sources (54, 59) are provided for the undervoltage detector stage (19) and the overvoltage detector stage (20).

3. An electric circuit arrangement according to claim 1, characterized in that the outputs of the reference voltage sources (54, 59) are connected to the inputs (44, 43) of the undervoltage detector stage (19) and the overvoltage detector stage (20).

4. An electric circuit arrangement according to claim 2, characterized in that the reference voltage source (59) for the overvoltage detector stage (20) is connected by a resistor (58) to the input (43) of the overvoltage detector stage (20).

5. An electric circuit arrangement according to claim 1, characterized in that a reference voltage source (72) in provided, which consists of a Zener diode (94) and a resistor (95) connected in series, a voltage divider consisting of at least two resistors (73, 74, 75) is connected in parallel to the Zener diode (94) and the input of the undervoltage detector stage (19) and the input (43) of the overvoltage detector stage are connected to the voltage divider.

6. An electric circuit arrangement according to claim 5, characterized in that the voltage divider is composed of two separate voltage dividers, each of which consists of two resistors (100, 101 and 102, 103), and the connections (76, 77) between the resistors of each of the two pairs are connected to respective inputs (43, 44) of the undervoltage and overvoltage detector stages (19, 20).

7. An electric circuit arrangement according to any of the preceding claims, characterized in that the undervoltage-simulating stage (4) consists of two resistors (30, 31) connected in series, one (30) of the resistors (30, 31) is adapted to be bridged by a switch (34) and the output (112) of the undervoltage-simulating stage (4) is constituted by the connection (33) between the two resistors (30, 31).

8. An electric circuit arrangement according to claim 7, characterized in that a series connection of a Zener diode (105) and a resistor (104) is connected in parallel to the switch (34).

9. An electric circuit arrangement according to any of claims 1 to 6, characterized in that the undervoltage-simulating stage (4) consists of a resistor (30) and a Zener diode (106) connected in series, the resistor (30) is adapted to the bridged by a switch (34) and the output (112) of the undervoltage-simulating stage (4) is constituted by the connection (33) between the resistor (30) and the Zener diode (106).

10. An electric circuit arrangement according to claim 1 to 6, characterized in that the undervoltage-simulating stage (4) consists of two resistors (30, 31) and a diode (107), which are connected in series, the series connection of the resistors(30, 31) is bridged by a capacitor (108), an electric switch (34) is adapted to bridge one (30) of the two resistors (30, 31) and the output (112) of the undervoltage-simulating stage (4) is constituted by the connection (33) between the two resistors (30, 31).

11. An electric circuit arrangement according to any of claims 1 to 6, characterized in that the undervoltage-simulating stage (4) consists of two resistors (30, 31) and an electric switch (109), which are connected in series, and the output (112) of the undervoltage-simulating stage (4) is constituted by the connection (33) between the two resistors (30, 31).

12. An electric circuit arrangement according to any of the preceding claims, characterized in that the undervoltage detector stage (19) is provided with a switch (65), which is adapted to interconnect the two input lines (49, 55) of the input (43) of the overvoltage detector stage (20).

13. An electric circuit arrangement according to any of the preceding claims, characterized in that the final control element (62) consists of an electric switch, which either disconnects the load (10) from the supply voltage or initiates in the load (10) a switching operation by which the load is rendered inactive.

14. An electric circuit arrangement according to any of the preceding claims, characterized in that an alarm stage (39) is provided, which is controlled via one line (40) from the load (10) and via another line (38) from a signal terminal (29), and signalling means are provided, which will deliver an output signal when the (active/inactive) state of the load (10) does not correspond to the input signal applied to the signal terminal (29).

15. An electric circuit arrangement according to claim 14, characterized in that the alarm stage (39) comprises a time delay circuit (110).

16. An electric circuit arrangement according to any of the preceding claims, characterized in that the overvoltage detector stage (20) comprises a differential amplifier (111), which actuates the final control element (62) of the load (10) and has an input (87), which is adapted to be bridged by another switch (88), which is controlled by the output (68) of an amplifier (67), which has an input to which the line terminals (49 and 55) of the overvoltage detector stage (20) are connected.

17. An electric circuit arrangement according to claim 16, characterized in that the switch (88) of the overvoltage detector stage (20) is connected by connecting lines (91, 92) to the voltage divider (73 to 75 and 101 to 103) and to the inputs (43, 44) of the undervoltage detector stage (19) and the overvoltage detector stage (20).

18. An electric circuit arrangement according to claim 17, characterized in that the voltage divider consists of three resistors (73 to 75) connected in series and the two connecting lines (92, 91) are connected to respective connections (76, 77) between the resistors (73/74 and 74/75).

19. A circuit arrangement according to claim 18, characterized in that a resistor (93) is included in one of the connecting lines (91, 92).

## Revendications

1. Montage électrique pour surveiller une tension d'alimentation d'un récepteur (10) à fonctionnement intermittent commandé par un organe d'exécution (62), avec un étage simulateur de sous-tension (4) et un étage de sous-tension (19), montage caractérisé par le fait que la tension de sortie de l'étage simulateur de sous-tension (4) est appliquée, par l'intermédiaire d'une ligne (48), aussi bien à une entrée (44) de l'étage de sous-tension (19) qu'à une entrée (43) d'un étage de surtension (20), étages où cette tension est comparée avec des tensions de référence fournies par des sources de tension de référence (54, 59), et qu'un contact (65) commandé par l'étage de sous-tension (19) court-circuite l'entrée (43) de l'étage de surtension (20), lequel comprend l'organe d'exécution (62) pour le récepteur (10), au moment où apparaît une sous-tension.

2. Montage électrique suivant la revendication 1, caractérisé par le fait qu'il est prévu des sources de tension de référence (54, 59) séparées pour l'étage de sous-tension (19) et l'étage de surtension (20).

3. Montage électrique suivant la revendication 1, caractérisé par le fait que les sorties des sources de tension de référennce (54, 59) sont reliées aux entrées (44, 43) de l'étage de sous-tension (19) et de l'étage de surtension (20).

4. Montage électrique suivant la revendication 2, caractérisé par le fait que la source de tension de référence (59) pour l'étage de surtension (20) est reliée à l'entrée (43) de l'étage de surtension (20) par l'intermédiaire d'une résistance (58).

5. Montage électrique suivant la revendication 1, caractérisé par le fait qu'il n'est prévu qu'une seule source de tension de référence (72) qui se compose d'une diode de Zener (94) en série avec une résistance (95), et qu'un diviseur de tension comprenant au moins deux résistances (73, 74, 75) est mis en parallèle avec la diode de Zener (94), l'entrée de l'étage de sous-tension (19) et l'entrée (43) de l'étage de surtension étant reliées au diviseur de tension.

6. Montage électrique suivant la revendication 5, caractérisé par le fait que le diviseur de tension comprend deux diviseurs de tension séparés qui se composent chacun de deux résistances (100, 101 et 102, 103), les points de jonction (76, 77) de deux résistances étant reliés aux entrées (43 respectivement 44) des étages de sous-tension et de surtension (19, 20).

7. Montage électrique suivant l'une des revendications précédentes, caractérisé par le fait que l'étage simulateur de sous-tension (4) se compose de deux résistances (30, 31) en série, l'une (30) des résistances (30, 31) pouvant être shuntée par un contacteur (34), et la sortie (112) de l'étage simulateur de sous-tension (4) étant formée par le point de jonction (33) des deux résistances (30, 31).

8. Montage électrique suivant la revendication 7, caractérisé par le fait qu'un montage en série d'une diode de Zener (105) et d'une résistance (104) est mis en parallèle avec le contacteur (34).

9. Montage électrique suivant l'une des revendications 1 à 6, caractérisé par le fait que l'étage simulateur de sous-tension (4) comprend une résistance (30) en série avec une diode de Zener (106), la résistance (30) pouvant être shuntée par un contacteur (34), et la sortie (112) de l'étage simulateur de sous-tension (4) étant formée par le point de jonction (33) entre la résistance (30) et la diode de Zener (106).

10. Montage électrique suivant les revendications 1 à 6, caractérisé par le fait que l'étage simulateur de sous-tension (4) est formé par deux résistances (30, 31) en série avec une diode (107), le montage en série des résistances (30, 31) étant shunté par un condensateur (108), et un contacteur (34) pouvant shunter l'une (30) des deux résistances (30, 31), et la sortie (112) de l'étage simulateur de sous-tension (4) étant formée par le point de jonction (33) entre les deux résistances (30, 31).

11. Montage électrique suivant l'une des revendications 1 à 6, caractérisé par le fait que l'étage simulateur de sous-tension (4) est formé par deux résistances (30, 31) en série avec un contacteur (109), la sortie (112) de l'étage simulateur de sous-tension (4) étant formée par le point de jonction (33) entre les deux résistances (30, 31).

12. Montage électrique suivant l'une des revendications précédentes, caractérisé par le fait que l'étage de sous-tension (19) est doté d'un contact (65) qui peut connecter les deux lignes (49, 55) de l'entrée (43) de l'étage de surtension (20).

13. Montage électrique suivant l'une des revendications précédentes, caractérisé par le fait que l'organe (62) est conçu comme contact électrique qui coupe la tension d'alimentation du récepteur (10) ou qui provoque une réaction dans le récepteur (10) qui le rend inactif.

14. Montage électrique suivant l'une des revendications précédentes, caractérisé par le fait qu'il est prévu un étage d'alerte (39) qui communique avec le récepteur (10) par une ligne (40) et avec une entrée de signaux (29) par une autre ligne (38), une disposition des signaux étant prévue de façon à faire émettre un signal au moment où l'état (actif/inactif) du récepteur (10) ne correspond pas au signal d'entrée sur la borne (29).

15. Montage électrique suivant la revendication 14, caractérisé par le fait que l'étage d'alerte (39) comprend un circuit temporisateur (110).

16. Montage électrique suivant l'une des revendications précédentes, caractérisé par le fait que l'étage de surtension (20) comprend un amplificateur différentiel (111) qui actionne l'organe d'exécution (62) du récepteur (10) et dont l'entrée (87) peut être shuntée par un autre contact (88) commandé par la sortie (68) d'un amplificateur (67) à l'entrée duquel sont reliées les lignes (49 et 55) de l'étage de surtension (20).

17. Montage électrique suivant la revendication 16, caractérisé par le fait que le contact (88) de l'étage de surtension (20) est relié par des lignes (91, 92) au diviseur de tension (73 à 75 respectivement 101 à 103) et aux entrées (43, 44) de l'étage de sous-tension (19) et de l'étage de surtension (20).

18. Montage électrique suivant la revendication 17, caractérisé par le fait que le diviseur de tension est conçu comme montage en série de trois résistances (73 à 75), et que les deux lignes (92, 91) sont reliées aux points de jonction (76, 77) entre respectivement deux résistances (73/74 et 74/75).

19. Montage électrique suivant la revendication 18, caractérisé par le fait que l'une des lignes (91, 92) comporte une résistance (93).
